# EUROPEAN PATENT APPLICATION

(11) **EP 1 814 052 A2**
(43) Date of publication of application: **01.08.2007**
(21) Application number: 06127359.5
(22) Date of filing: 29.12.2006
(51) Int. Cl.: G06F 21/00

(54) **Apparatus and method for importing content including plural pieces of usage constraint information**

(30) Priority: 03.01.2006 US 755092 P; 08.03.2006 KR 20060021837
(71) Applicant: Samsung Electronics Co., Ltd., Suwon-si 442-742 Gyeonggi-Do (KR)
(72) Inventor: Yoon, Young-sun, Suwon-si, Gyeonggi-do (KR); Kim, Bong-seon 903-411 Cheongsol Maeul, Bundang-hu, Seongnam-si, Gyeonggi-do (KR); Nam, Su-hyun, Seoul (KR)
(74) Representative: Robinson, Ian Michael

(57) **Abstract**

An apparatus and method for protecting digital content in a digital rights management (DRM) system. In the apparatus and method, usage rules for respective content parts included in a first content file are determined based on plural items of information in the first content file, and a second content file complying with the usage rules is generated. Accordingly, it is possible to allow a user to use only that part of the content included in an externally received content file, which the user has a right to use.

## Description

The present invention relates to protection of digital content, and more particularly, to protection of digital content in a digital rights management (DRM) system.

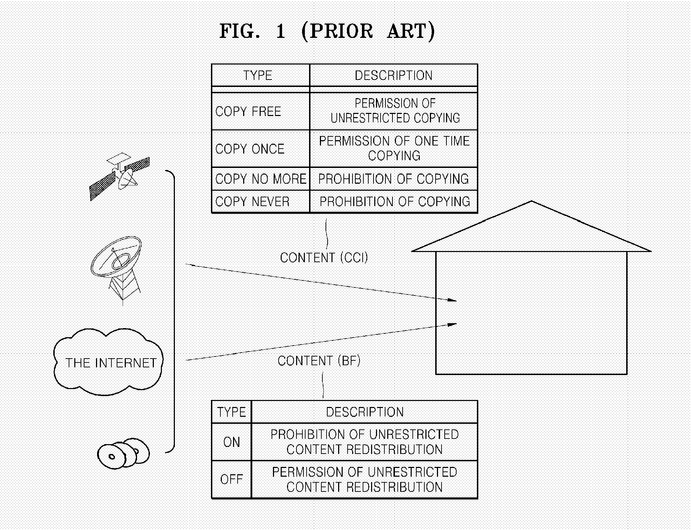

As the world is moving from the analogue age to the digital age, content is generally created in a digital form. Referring to Figure 1, in the conventional digital content protection environment, a transmission stream is received through a variety of transmission channels, and digital content is designed to be protected by using information included in the transmission stream.

In particular, a U.S. organization, Cable Television Laboratories, Inc. (CableLabs), ordered that copy control information (CCI) be attached to digital content in order to control copying of the content. The CCI is 2-bit information which restricts the number of times digital content may be copied. The types of CCI include copy free (00), copy once (01), copy no more (10) and copy never (11). Copy free indicates that copying the content is permitted without restriction. Copy once indicates that only one copy is permitted. If content with the CCI of copy once (01) is copied, the CCI of this content then becomes copy no more (10). Copy never indicates a prohibition on copying the content.

In order to prohibit unrestricted redistribution of high definition (HD)-level digital content broadcast in the U.S., the U.S. Federal Communications Commission (FCC) has ordered that a broadcast flag should be attached to digital content. The broadcast flag is 1-bit information indicating whether or not unrestricted redistribution of digital content is prohibited. The types of broadcast flag include broadcast flag on (1) and broadcast flag off (0). Broadcast flag on indicates that unrestricted redistribution of digital content is not permitted, while broadcast flag off indicates that unrestricted redistribution of the digital content is permitted.

However, since the conventional methods of protecting digital content, such as the CCI and the broadcast flag, are very simple and limited in their options, it is difficult to protect digital content while also satisfying the needs of content consumers for freer usage of content. In addition, with only the conventional methods of the CCI and the broadcast flag, it is difficult to limit use to authorized users when the content is being distributed. Also, these methods are not effective to prevent content from being illegally redistributed to or used by many and unspecified persons.

According to the present invention there is provided an apparatus and method as set forth in the appended claims. Preferred features of the invention will be apparent from the dependent claims, and the description which follows.

The present invention provides an apparatus and method capable of protecting digital content while responding to the needs of users for freer use of the content, allowing only authorized users to use the content, and preventing the content from being illegally redistributed to or used by many and unspecified persons.

The present invention also provides a computer readable recording medium having embodied thereon a computer program for executing the method in a computer system.

According to an aspect of the present invention, there is provided an apparatus of importing a first content file as a second content file, the apparatus comprising a usage rule determination unit which determines usage rules for corresponding content parts included in the first content file, based on plural items of information included in the first content file; and a content file generation unit which generates a second content file complying with the determined usage rules.

According to another aspect of the present invention, there is provided a method of importing a first content file as a second content file, the method comprising (a) determining a usage rule for a first content part included in the first content file based on first information included in the first content file, (b) determining a usage rule for a second content part included in the first content file based on second information included in the first content file, and (c) generating a second content file complying with the usage rules determined in (a) and (b).

According to another aspect of the present invention, there is provided a computer readable medium having recorded thereon a program for executing the method.

The above and other aspects and advantages of the present invention will become more apparent by describing in detail exemplary embodiments thereof with reference to the attached drawings in which:
Figure 1 illustrates a conventional digital content protection environment;
Figure 2 illustrates a digital content protection environment according to an embodiment of the present invention;
Figure 3 is a diagram of a content import apparatus according to an embodiment of the present invention;
Figure 4 illustrates a UCI/UR mapping table according to an embodiment of the present invention;
Figure 5 illustrates a format of a content file according to an embodiment of the present invention; and
Figures 6A and 6B are flowcharts illustrating a content import method according to an embodiment of the present invention.

Hereinafter, exemplary embodiments of the present invention will be described in detail with reference to the accompanying drawings.

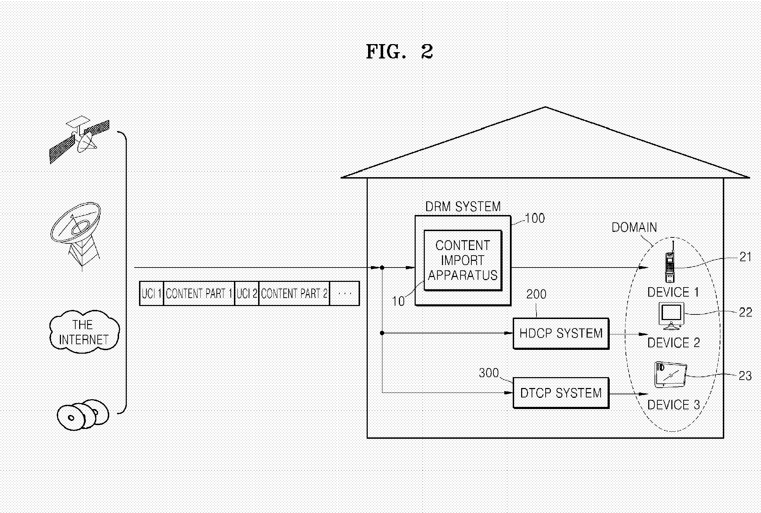

Referring to Figure 2, a digital content protection environment according to an embodiment of the present invention is comprised of a variety of content protection systems, such as a digital rights management (DRM) system 100, a high bandwidth digital content protection (HDCP) system 200, and a digital transmission content protection (DTCP) system 300, and a plurality of devices 21 through 23 protected by these content protection systems.

The DRM system 100 is a system for managing the rights of content received from the outside. The HDCP system 200 is a system for preventing copying of digital content supplied to a digital display through a high bandwidth interface, such as a digital video interface (DVI). The DTCP system 300 is a system for preventing copying of digital content transmitted through a universal serial bus (USB) complying with the Institute of Electrical and Electronics Engineers (IEEE) 1394 standard. In addition to these content protection systems, it would be apparent to those of ordinary skill in the art that other content protection systems, such as a conditional access system (CAS), and content protection for recordable media (CPRM) system, may further be included.

In particular, according to the present embodiment, the DRM system 100 includes a content import apparatus 10 which imports digital content, which is protected by the conventional methods of copy control information (CCI) and the broadcast flag, as digital content complying with a rule of the DRM system 100 designed so that the rule can satisfy the security requirements of content creators and content providers and at the same time can satisfy the requirement of content consumers for free usage of content.

In an embodiment of the present invention, the importing of content is defined as a process in which a license for each part of the content is issued according to the rule of the DRM system 100 and each part of the content is encrypted. That is, in the present embodiment, the importing of content is a process of converting a content file not complying with the rule of the DRM system 100 as a content file complying with the rule of the DRM system 100. In particular, each part of the content can be identified with usage constraint information or a license. That is, each part of the content has different usage constraint information or the license therefor.

In the present embodiment, the content file is a file including plural items or parts of digital content, and CCI or licenses for the respective content parts. In particular, a person of ordinary skill in the art may understand that the term, 'a content file', can also be simply referred to as 'content'.

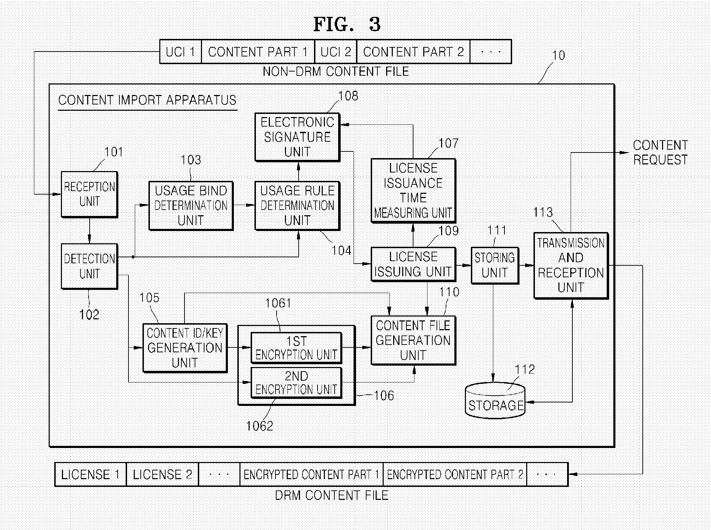

Figure 3 illustrates a structure of a content import apparatus 10 illustrated in Figure 2 according to an embodiment of the present invention. Referring to Figure 3, the content import apparatus 10 is comprised of a reception unit 101, a detection unit 102, a usage bind determination unit 103, a usage rule determination unit 104, a content ID/key generation unit 105, an encryption unit 106, a first encryption unit 1061, a second encryption unit 1062, a license issuance time measuring unit 107, an electronic signature unit 108, a license issuance unit 109, a content file generation unit 110, a storing unit 111, a storage 112, and a transmission and reception unit 113.

The reception unit 101 receives a transmission stream through a variety of transmission channels. For example, the reception unit 101 may receive a transmission stream through a wireless medium, such as a satellite and a ground base station, or through a wired medium such as the Internet, or through a recording medium such as a digital versatile disk (DVD).

The detection unit 102 detects a content file from the transmission stream received by the reception unit 101, and a plurality of content parts and usage constraint information (UCI) of each content part from the content file. The content file detected by the detection unit 102 does not comply with the rule of the DRM system 100, and includes the conventional CCI or broadcast flag. As illustrated in Figure 2, the content parts included in this content file may be protected by the DRM system 100, the conventional HDCP system 200, or the DTCP system 300. However, in order to protect the content parts included in this content file by the DRM system 100, the content file detected by the detection unit 102 should be imported as a content file complying with the rule of the DRM system 100.

Examples of the UCI may include the conventional CCI and the broadcast flag. As described above, the CCI is information which restricts the number of times of copying of digital content. The types of CCI include copy free, copy once, copy no more and copy never. Also, the broadcast flag is information indicating whether or not unrestricted redistribution of the content is prohibited. The types of broadcast flag include broadcast flag on and broadcast flag off.

However, since copy no more is a CCI occurring when a content part has been copied once, the DRM system 100 cannot receive the content part with the CCI of copy no more, and thus cannot import the content part labeled copy no more. This is because the DRM system 100 is a content protection system which receives for the first time a transmission stream through a variety of broadcast transmission channels as illustrated in Figure 2, and a case where the DRM system 100 receives the content part with the CCI of copy no more should not occur. Also, since copy never indicates prohibition of copying content, the DRM system 100 cannot copy a content part with the CCI of copy never, and as a result, cannot import the content part with copy never. This is because in order to import any one content part, the DRM system 100 should copy a content part included in a content file which does not comply with the rule of the DRM system 100 and include the copied content part in a content file which complies with the rule of the DRM system 100.

Also, if the broadcast flag of a content part is broadcast flag off, unrestricted redistribution of the content part is permitted, and thus, protection of the content by the DRM system 100 is not needed. Accordingly, the DRM system 100 does not need to import the content part with broadcast flag off. That is, according to the present embodiment, there is no case where the content import apparatus 100 imports a content part with the CCI of copy no more or copy never, or a content part with the broadcast flag of broadcast flag off. Accordingly, a case where the CCI of content is copy no more or copy never, or the broadcast flag of content is broadcast flag off will be excluded in the following description.

The usage bind determination unit 103 determines a usage bind of each content part detected by the detection unit 102 based on the UCI detected by the detection unit 102 according to the rule of the DRM system 100. A "usage bind" as used herein, essentially corresponds to a defined usage category or scope. Considered herein are two categories, the first wherein usage is confined to a particular device, which will be referred to as a "device bound", and a second where usage is confined to a particular domain which may include a variety of devices, which will be referred to as a "domain bound". More specifically, the usage bind determination unit 103 determines the usage bind of each content part detected by the detection unit 102 to be a device bound, which limits the usage of each content part to any one device, or a domain bound which limits the usage of each content part to all devices included in a domain.

This will now be explained with an example in which the UCI detected by the detection unit 102 is CCI. That is, if the copy control information of one of the content parts detected by the detection unit 102 is copy free, the usage bind determination unit 103 determines the usage bind of the content part to be a device bound which limits the usage bind of content to any one device or a domain bound which limits the usage bind of the content to all devices included in a domain. Also, if the copy control information of one of the content parts detected by the detection unit 102 is copy once, the usage bind determination unit 103 determines the usage bind of the content part to be a device bound according to the rule of the DRM system 100.

Since copy free indicates that unrestricted copying of content is permitted, the usage bind may be either of the device bound and the domain bound, as described in more detail hereafter.

However, since copy once indicates that copying of the content is permitted only once, the usage bind can only be the device bound. This is because if the usage bind of the content is determined as the domain bound, free copying of the content among devices included in a domain should be permitted.

Next, an example in which the UCI detected by the detection unit 102 is the broadcast flag will now be explained. That is, if the broadcast flag of one of the content parts detected by the detection unit 102 is broadcast flag on, the usage bind determination unit 103 determines the usage bind of the content part to be the device bound or the domain bound according to the rule of the DRM system 100. If the broadcast flag is broadcast flag on, this indicates that unrestricted redistribution of the content is not permitted, thus the usage bind may be the device bound or the domain bound. This is because the usage of a content part within the device bound complies with the prohibition of unrestricted redistribution of the content part, and since the domain bound is a specified area that can be recognized by a user, the usage of the content part within the domain bound also complies with the prohibition of unrestricted redistribution of the content part.

Generally, since a user presets which domain is composed of which devices, the domain bound can also be referred to as a user bound. Also, as described above, since the rule of the DRM system 100 is determined in the direction that the rule can satisfy the security requirement of content creators and content providers and at the same time can satisfy the requirement of content consumers for free usage of content, the usage bind determination unit 103 determines the usage bind of the content as device bound or domain bound in this same direction, i.e., in a balanced manner. Thus, device bound is determined only when determining that domain bound violates the UCI, because the content usage right of a user can be so restricted.

The usage rule determination unit 104 determines a usage rule for each content part detected by the detection unit 102 based on the UCI detected by the detection unit 102 according to the rule of the DRM system 100. More specifically, the usage rule determination unit 104 determines a usage rule of each content part with respect to each usage bind determined by the usage bind determination unit 103. If the usage bind of the content part determined by the usage bind determination unit 103 is a device bound, the usage rule determination unit 104 determines a usage rule of the content part in any one device. If the usage bind of the content part determined by the usage bind determination unit 103 is a domain bound, the usage rule determination unit 104 determines a usage rule of the content part in any one domain.

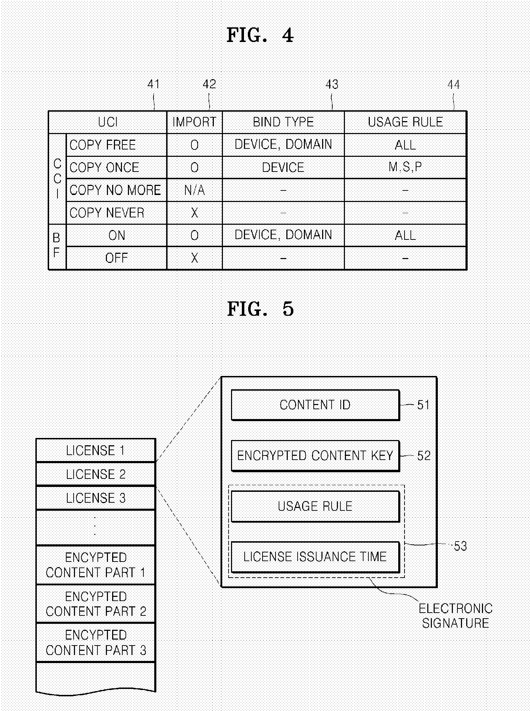

Figure 4 illustrates a UCI/UR mapping table according to an embodiment of the present invention. Referring to Figure 4, the UCI/UR mapping table according to an embodiment of the present invention is composed of a UCI field 41, an import field 42, a bind type field 43, and a usage rule field 44. In particular, the UCI/UR mapping table is related to one of the content parts constituting content.

UCI of the content part is recorded in the UCI field 41. In the import field 42, a value indicating whether or not the content part having the UCI recorded in the UCI field 41 can be imported is recorded. In the bind type field 43, usage binds based on the UCI recorded in the UCI field 41 are recorded. In the usage rule field 44, usage rules corresponding to the usage binds recorded in the bind type field 43 are recorded, based on the UCI recorded in the UCI field 41.

In particular, among values recorded in the usage rule field 44, "all" indicates that all types of usages of the content part are permitted. Also, among the values recorded in the usage rule field 44, "M" indicates moving of the content part. Moving of the content part means that the content part is deleted from a device and stored in another device at the same time. Also, among the values recorded in the usage rule field 44, "S" indicates streaming of the content part. The streaming of the content part means that the content stored in a device is temporarily output to another device but the content is continuously stored in the original device. Also, among the values recorded in the usage rule field 44, "P" indicates playing of the content. The playing of the content means that a device plays the content.

Since copy free indicates that unrestricted copying of content is permitted, if the UCI is copy free, "device" and "domain" are recorded in the bind type field 43 and "all" is recorded in the usage rule field 44. Meanwhile, since copy once indicates that copying of content is permitted only once, if the UCI is copy once, "device" is recorded in the bind type field 43 and "M, S, and P" are recorded in the usage rule field 44.

In addition to moving, streaming and playing, examples of usages of the content part further include copying of content. The copying of content means that content imported according to an embodiment of the present invention is copied. However, in order for the content import apparatus 10 to import the content part, copying of the content part is required as a prerequisite and as a result, if the content part imported according to the present embodiment is copied, the frequency of copying becomes twice. Accordingly, though the content import apparatus 10 can import the content part with the UCI being copy once, the content import apparatus 10 cannot permit copying of the content imported according to the present embodiment. This is the reason why only "M, S, and P" are recorded in the usage rule field 44 when the UCI is copy once.

Since broadcast flag on indicates that unrestricted redistribution of content is not permitted, if the broadcast flag is broadcast flag on, "device" and "domain" are recorded in the bind type field 43 and "all" is recorded in the usage rule field 44.

Any type of usage of the content part in a device bound, including copying of the content part, complies with the prohibition of unrestricted redistribution of the content part, and since a domain bound is a specified area that can be recognized by a user, any type of usage of the content part in the domain bound, including copying of the content part, complies with the prohibition of unrestricted redistribution of the content part.

The content ID/key generation unit 105 generates the IDs of the content parts detected by the detection unit 102 according to the rule of the DRM system 100, and generates content keys corresponding to the content IDs. The content keys generated by the content ID/key generation unit 105 are used to encrypt the content parts detected by the detection unit 102.

The encryption unit 106 selectively encrypts each content part detected by the detection unit 102 based on the corresponding UCI detected by the detection unit 102. That is, if the CCI is copy no more or copy never, or the broadcast flag is broadcast flag off, the content import apparatus 10 does not import the content, and therefore, the encryption unit 106 does not encrypt the content parts detected by the detection unit 102. The encryption unit 106 is composed of the first encryption unit 1061 for encrypting the content keys and the second encryption unit 1062 for encrypting the content parts.

The first encryption unit 1061 encrypts the content keys generated by the content ID/key generation unit 105 with encryption keys corresponding to the usage binds determined by the usage bind determination unit 103, respectively. If the usage bind of the content part determined by the usage bind determination unit 103 is the device bound, the first encryption unit 1061 encrypts a content key, which will be used to encrypt the content part, with an encryption key (hereinafter referred to as a "device key") corresponding to a device. If the usage bind of the content part determined by the usage bind determination unit 103 is the domain bound, the first encryption unit 1061 encrypts a content key, which will be used to encrypt the content part, with an encryption key (hereinafter referred to as a "domain key") corresponding to a domain.

Accordingly, among devices which receive the content imported by the content import apparatus 10, only a device having a device key or a domain key used to encrypt the content keys can decrypt the content keys encrypted by the first encryption unit 1061. Thus, this encryption process allows a user to use only a part of the content, which the user has a right to use, and effectively prevents the content from being illegally redistributed to or used by an unspecified number of persons, content part by content part.

For example, in order to allow only a device or a domain selected by a user to obtain the content keys, the first encryption unit 1061 only needs to encrypt the content keys with a device key corresponding to a device selected by the user or with a domain key corresponding to a domain selected by the user. However, the first encryption unit 1061 should know which device corresponds to which encryption key, and information on this relation can be obtained from a server such as a domain administrator (not shown).

The second encryption unit 1062 selectively encrypts each content part detected by the detection unit 102 with the corresponding one of the content keys generated by the content ID/key generation unit 105.

When the encryption by the first encryption unit 1061 is finished and the preparations for issuing a license for each content part are complete, the license issuance time measuring unit 107 measures times to issue the respective licenses. By inserting the thus measured license issuance times into the corresponding licenses, it can be made that only a device authorized at the times when these licenses are issued, among devices receiving the content imported by the content import apparatus 10, can use the content part. However, if the license issuance times are faked, the security requirement of content creators and content providers cannot be satisfied, and as a result, the content protection function of the DRM system 100 cannot operate properly. Accordingly, secure times that cannot be manipulated arbitrarily should be used for the license issuance times.

The electronic signature unit 108 electronically signs the usage rules determined by the usage rule determination unit 104 according to the rule of the DRM system 100, and the license issuance times measured by the license issuance time measuring unit 107. Generally, an electronic signature is used to guarantee that a document or a message is not falsified. If the usage rules determined by the usage rule determination unit 104 or the license issuance times measured by the license issuance time measuring unit 107 are falsified, the security requirement of content creators and content providers cannot be satisfied and as a result, the content protection function of the DRM system 100 cannot operate properly.

The license issuance unit 109 generates and issues licenses for the respective content parts, the licenses including the usage rules and the license issuance times electronically signed by the electronic signature unit 108 according to the rule of the DRM system 100, the content IDs generated by the content ID/key generation unit 105, the content keys encrypted by the first encryption unit 1061, and the license issuance times measured by the license issuance time measuring unit 107. In particular, since a license is generated based on UCI, each license includes an electronically signed usage rule and license issuance time, a content ID, and a content key.

More specifically, the license issuance unit 109 generates and issues the licenses, each including the usage rule for the corresponding usage bind determined by the usage bind determination unit 103, the usage rule being determined by the usage rule determination unit 104. If the usage bind of the content part determined by the usage bind determination unit 103 is the device bound, the license issuance unit 109 generates and issues a license for a device. If the usage bind of the content part determined by the usage bind determination unit 103 is the domain bound, the license issuance unit 109 generates and issues a license for a domain.

Figure 5 illustrates a format of a content file according to an embodiment of the present invention. Referring to Figure 5, the content file includes encrypted content parts and licenses therefor. In the content file illustrated in Figure 5, all the licenses are located at the start of the content file and encrypted content parts are located next to the licenses so as to quickly determine the number of licenses included in the content file. Alternatively, the encrypted content parts and their licenses may be arranged in series.

Each license includes a content ID 51, an encrypted content key 52, and an electronically signed usage rule and license issuance time 53.

A device which receives a content part imported by the content import apparatus 10 can identify the content part imported by the content import apparatus 10 by referring to the content ID 51 of the license illustrated in Figure 5. Also, in order to obtain the identified content, the device which receives the content part imported by the content import apparatus 10 attempts to decrypt the encrypted content key 52 of the license illustrated in Figure 5. As described above, among devices receiving the content part imported by the content import apparatus 10, only a device having a device key or a domain key used to encrypt the content key can decrypt the encrypted content key 52. Also, the device receiving the content part imported by the content import apparatus 10 decrypts the imported content part with the key restored through decryption. This is because the content part imported by the content import apparatus 10 is encrypted as described above.

Also, the device receiving the content part imported by the content import apparatus 10 confirms whether or not the electronically signed usage rule and license issuance time 53 of the license illustrated in Figure 5 is falsified, and confirms whether or not the user is authorized for the content based on the usage rule and license issuance time 53. As a result, if it is confirmed that the electronically signal usage rule 53 is not falsified and the user is authorized for the content part, the device receiving the content imported by the content import apparatus 10 uses the content part according to the usage rule included in the license illustrated in Figure 5. Accordingly, the security requirement of content creators and content providers can be satisfied and at the same time the requirement of content consumers for free usage of the content can be satisfied sufficiently.

The storing unit 111 stores the content file generated by the content file generation unit 110 in the storage 112.

When receiving a request from any one of the devices 21 through 23 illustrated in Figure 2 to transmit the content to the device, the transmission and reception unit 113 transmits the content file stored in the storage 112 to this device. The transmission and reception unit 113 may transmit the content file according to an arbitrary method that the device supports. For example, the content may be transmitted through a storage medium, such as a secure digital (SD) card, or according to a transmission protocol such as a real-time transport protocol (RTP) .

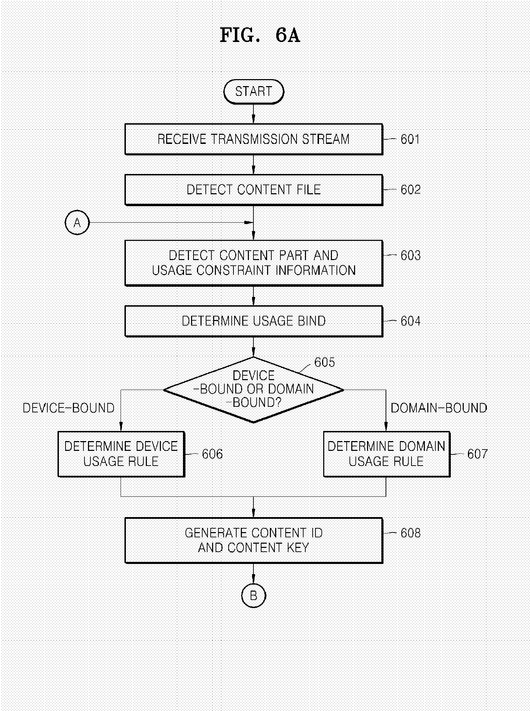

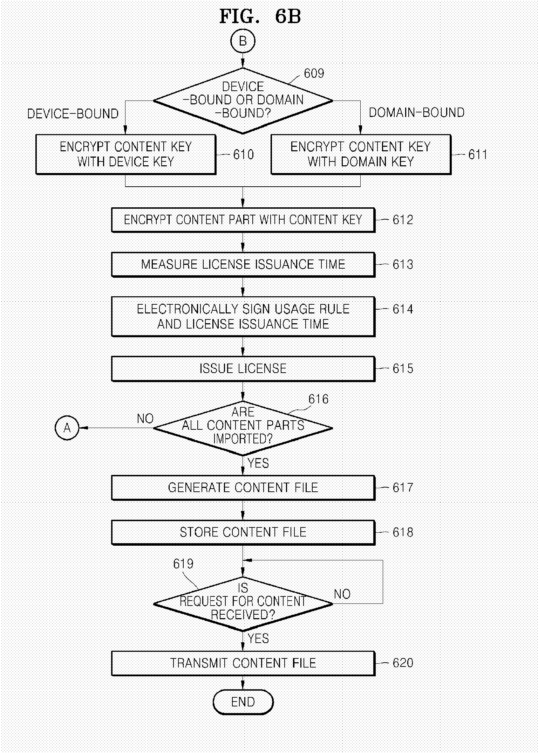

Figures 6A and 6B are flowcharts illustrating a content import method according to an embodiment of the present invention. Referring to Figures 6A and 6B, the content import method according to the present embodiment is composed of operations processed in time series in the content import apparatus 10 illustrated in Figure 3. Accordingly, the explanation made above in relation to the content import apparatus 10 illustrated in Figure 3, though not repeated below, is also applied to the content import method according to the present embodiment.

In operation 601, the content import apparatus 10 receives a transmission stream through a variety of transmission channels.

In operation 602, the content import apparatus 10 detects a content file from the transmission stream received in operation 601.

In operation 603, the content import apparatus 10 detects a content part and UCI for the content part from the content file received in operation 602.

In operation 604, the content import apparatus 10 determines the usage bind of the content part detected in operation 603 based on the UCI detected in operation 603 according to the rule of the DRM system 100.

In operation 605, if the usage bind determined in operation 603 is the device bound, the content import apparatus 10 performs operation 606 and if it is the domain bound, the content import apparatus 10 performs operation 607.

In operation 606, the content import apparatus 10 determines a device usage rule for the content part, the usage bind of which is determined as the device bound in operation 604, based on the UCI detected in operation 603.

In operation 607, the content import apparatus 10 determines a domain usage rule for the content part, the usage bind of which is determined as domain bound in operation 604, based on the UCI detected in operation 603.

In operation 608, the content import apparatus 10 generates the ID of the content part detected in operation 603, and a content key corresponding to this content ID according to the rule of the DRM system 100.

In operation 609, if the usage bind determined in operation 604 is the device bound, the content import apparatus 10 performs operation 610, and if it is the domain bound, the content import apparatus 10 performs operation 611.

In operation 610, the content import apparatus 10 encrypts the content key with a device key corresponding to a device according to the rule of the DRM system 100.

In operation 611, the content import apparatus 10 encrypts the content key with a domain key corresponding to a domain according to the rule of the DRM system 100.

In operation 612, the content import apparatus 10 encrypts the content part detected in operation 603 with the content key generated in operation 607 based on the UCI detected in operation 603.

In operation 613, if the encryption in operation 610 or 611 is finished and preparation for issuing a license is finished, the content import apparatus 10 measures the time to issue the license.

In operation 614, the content import apparatus 10 electronically signs the usage rule determined in operation 606 or 607 and the license issuance time measured in operation 613 according to the rule of the DRM system 100.

In operation 615, according to the rule of the DRM system 100 the content import apparatus 10 generates and issues a license including the content ID generated in operation 608, the content key encrypted in operation 610 or 611, and the usage rule and license issuance time electronically signed in operation 614.

In operation 616, the content import apparatus 10 determines whether all content parts of the content file received in operation 602 are imported. That is, in operation 616, the content import apparatus 10 determines whether operations 603 through 615 are performed on all content parts of the content file received in operation 612. The content import apparatus 10 performs operation 617 when all the content parts of the content file received in operation 602 are imported, and proceeds to operation 603 otherwise. In the latter case, i.e., when the content import apparatus 10 proceeds to operation 603, it detects another content part, which is different from the above content part, and UCI therefor from the content file received in operation 602. Similarly, operations 604 through 616 are repeated.

In operation 617, the content import apparatus 10 generates a content file complying with the usage rule determined in operation 606 or 607 according to the rule of the DRM system 100. That is, in operation 617, the content import apparatus 10 generates the content file including the license issued in operation 615 and the content part encrypted in operation 612.

In operation 618, the content import apparatus 10 stores the content file generated in operation 616.

In operation 619, when receiving a request from any one of the devices 21 through 23 illustrated in Figure 2 to transmit the content to the device, the content import apparatus 10 performs operation 620.

In operation 620, the content import apparatus 10 transmits the content file stored in operation 619.

The above embodiments of the present invention can be embodied as a computer readable program, and realized in a general digital computer capable of executing the program via a computer readable medium. Also, the data structures used in the above embodiments can be recorded on a computer readable medium via various devices.

Examples of the computer readable recording medium include a magnetic storage medium, e.g., read-only memory (ROM), a floppy disk, and a hard disc; an optical recording medium, e.g., a CD-ROM, a digital versatile disc (DVD); and carrier waves (such as data transmission through the Internet).

According to the present invention, content that does not comply with the rule of a DRM system is imported as content complying with the rule of the DRM system. By doing so, the content can be protected while being responsive to the demand of users for free usage, and only users authorized for the content can be allowed to use the content. As a result, it is possible to prevent the content from being illegally redistributed to or used by an unspecified number of persons.

In particular, according to the present invention, the usage rule of each content part in the content file is determined and a content file complying with the usage rule is generated, based on plural items of information (plural items of copy control information, broadcast flags, etc.) which are included in a content file received from outside. Therefore, it is possible to allow a user to use only a content part in the content file, for which the user has a right to use, and effectively prevent content included in the content file from being illegally redistributed to or used by an unspecified number of persons. Also, according to the present invention, it is possible to satisfy a user's request for free use of the content, in units of or per each content part.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus importing a first content file as a second content file, comprising:
a usage rule determination unit (104) for determining usage rules for corresponding content parts included in the first content file, based on plural items of information included in the first content file; and
a content file generation unit (110) for generating the second content file complying with the determined usage rules.

2. The apparatus of claim 1, wherein the plural items of information are plural items of usage constraint information of the respective content parts, and
the usage rule determination unit (104) determines the usage rules corresponding to the plural items of usage constraint information.

3. The apparatus of claim 2, wherein at least one of the plural items of usage constraint information is information limiting a number of times that at least one of the content parts may be copied.

4. The apparatus of claim 2 or 3, wherein at least one of the plural items of usage constraint information is information indicating whether unlimited redistribution of at least one of the content parts is prevented.

5. The apparatus of any preceding claim, further comprising an encryption unit (106) for encrypting each content part based on the plural items of information,
wherein the content file generation unit (110) generates the second content file including the usage rules and the encrypted content parts.

6. The apparatus of any preceding claim, further comprising a usage bind determination unit (103) determining usage binds of the respective content parts,
wherein the usage rule determination unit (104) determines usage rules of the content parts for the determined usage binds.

7. The apparatus of claim 6, wherein the usage bind determination unit (103) determines the usage bind of each content part to be device bound, which limits the usage bind to a device, or domain bound, which limits the usage bind to all devices included in a domain, and
the usage rule determination unit (104) determines a device usage rule for the content parts whose usage binds are determined to be device bound, and a domain usage rule for the content parts whose usage binds are determined to be domain bound.

8. The apparatus of claim 6, further comprising:
a first encryption unit (1061) encrypting content keys with encryption keys corresponding to the determined usage binds, respectively; and
a second encryption unit (1062) encrypting the content parts with the content keys, respectively,
wherein the content file generation unit (110) generates the second content file including the usage rules, and the encrypted content keys and content parts.

9. The apparatus of any preceding claim, further comprising a license issuance unit (109) generating and issuing licenses for the respective content parts respectively including the determined usage rules,
wherein the content file generation unit (110) generates the second content file including the issued licenses.

10. The apparatus of claim 9, further comprising a measuring unit (107) for measuring times to issue the respective licenses,
wherein the license issuance unit (109) generates the licenses further including the measured times.

11. The apparatus of any preceding claim, further comprising:
an electronic signature unit (108) electronically signing the determined usage rules; and
a license issuance unit (109) generating and issuing licenses for the respective content parts, the licenses respectively including the electronically signed usage rules,
wherein the content file generation unit (110) generates the second content file including the issued licenses.

12. The apparatus of any preceding claim, wherein the first content file does not comply with a rule of a predetermined digital rights management system, and
the second content file complies with the rule of the predetermined digital rights management system.

13. A method of importing a first content file as a second content file, comprising:
(a) determining a usage rule for a first content part included in the first content file based on first information included in the first content file;
(b) determining a usage rule for a second content part included in the first content file based on second information included in the first content file; and
(c) generating a second content file complying with the usage rules determined in (a) and (b).

14. The method of claim 13, wherein the first information is usage constraint information of the first content part, and
the second information is usage constraint information of the second content part,
wherein (a) comprises determination of the usage rule corresponding to the usage constraint information of the first content part, and
(b) comprises determination of the usage rule corresponding to the usage constraint information of the second content part.

15. The method of claim 13 or 14, further comprising:
(d) selectively encrypting the first content part based on the first information; and
(e) selectively encrypting the second content part based on the first information,
wherein (c) comprises generation of the second content file including the usage rule determined in (a), the usage rule determined in (b), the first content part encrypted in (d), and the second content part encrypted in (e).

16. The method of claim 13, 14 or 15, further comprising:
(f) determining a usage bind of the first content part based on the first information; and
(g) determining a usage bind of the second content part based on the second information,
wherein (a) comprises determination of the usage rule of the first content part for the usage bind determined in (f), and
b) comprises determination of the usage rule of the second content part for the usage bind determined in (g).

17. The method of claim 13, further comprising:
(h) generating and issuing a license for the first content part, the license including the usage rule determined in (a); and
(i) generating and issuing a license for the second content part, the license including the usage rule determined in (b),
wherein (c) comprises generation of the second content file including the licenses issued in (h) and (i).

18. A computer readable medium having recorded thereon a computer program for executing a method of importing a first content file as a second content file, the method comprising:
(a) determining a usage rule for a first content part included in the first content file based on first information included in the first content file;
(b) determining a usage rule for a second content part included in the first content file based on second information included in the first content file; and
(c) generating a second content file complying with the usage rules determined in (a) and (b).
